# EUROPEAN PATENT APPLICATION

(11) **EP 1 995 911 A1**
(43) Date of publication of application: **26.11.2008**
(21) Application number: 07711028.6
(22) Date of filing: 01.03.2007
(51) Int. Cl.: H04L 12/28

(54) **A DEVICE AND METHOD, FOR PROCESSING THE RESOURCE REQUEST, A POLICY DECISION FUNCTION ENTITY THEREOF**

(30) Priority: 01.03.2006 CN 200610057822
(71) Applicant: Huawei Technologies Co., Ltd., Shenzhen, Guangdong Province 518129 (CN)
(72) Inventor: HUANG, Fuqing, Guangdong 518129 (CN)
(74) Representative: Karlsson, Leif Karl Gunnar
(86) International application number: PCT/CN2007/000648
(87) International publication number: WO 2007/098698

(57) **Abstract**

A device and method for processing resource requests, and a policy decision function entity. The method include: receiving a first resource request message carrying at least one media stream collection; according to the first resource request message, generating a second resource request message corresponding to each external entity among one or more external entities, where the second resource request message carries media streams selected from at least one media stream collection, and the selected media streams require the resources on the corresponding external entity. The device includes: a resource request receiving unit and a resource request processing entity. The policy decision function entity includes a media stream resource decision unit, and a message assembling unit. The present invention solves the inability of processing different media streams flexibly in a resource request in the prior art. The present invention may process different media streams in a session flexible, thus reducing the waste of network resources and the system overhead of the user.

## Description

### FIELD OF THE INTVTANTION

. The present invention relates to communication technologies, and in particular, to a device and method for processing resource requests, and a policy decision function entity.

### BACKGROUND

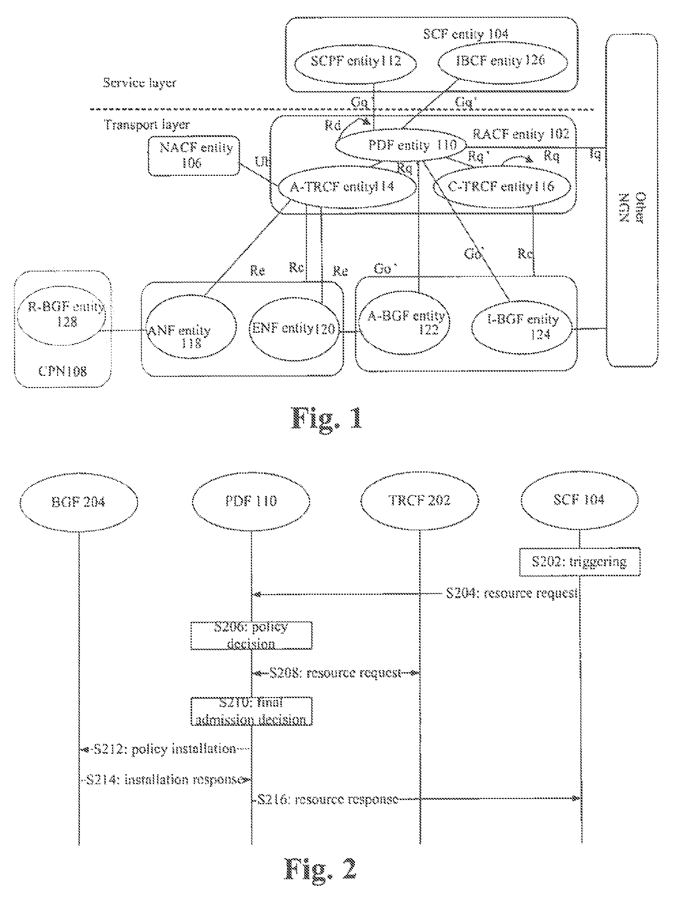

. Currently, the International Telecommunications Union (ITU) is formulating a resource and admission control subsystem (RACS) under the next generation network (NGN) architecture. Figure 1 shows a resource and admission control function (RACF) entity 102 in the NGN architecture. As shown in Figure 1, the RACF entity 102 is responsible for negotiating and allocating resources between the application layer and the transport layer. The RACF entity 102 controls the quality of service (QoS) of the access network and core network, including admission control, QoS routing and resource reservation. The RACF entity 102 provides network address translation (NAT) control, gate control and firewall traversal at the network border.

. In the access network, the RACF entity 102 can interact with the network attachment control function (NACF) entity 106 to obtain a user's access information. The RACF entity 102 further interacts with a service control function (SCF) entity 104, a customer premises network (CPN) 108, an access border gateway function (A-BGF) entity 122, an interconnection border gateway function (I-BGF) entity 124, an access node function (ANF) entity 118, and an edge node function (ENF) entity 120. The SCF entity 104 includes: a service control proxy function (SCPF) entity 112 and an interconnection border control function (IBCF) entity 126; and the CPN includes a residential border gateway function (R-BGF) entity 128. If a service traverses networks of multiple operators, the SCF entity 104, the RACF entity 102, and the transport function entity need to interact with the peer entities of other networks.

. The RACF entity 102 is categorized into two types: policy decision function (PDF) entity 110; and transport resource control function (TRCF) entity. The two types of entities are represented by an access network TRCF (A-TRCF) entity 114 and a core network TRCF (C-TRCF) entity 116 in the figure. The PDF entity 110 provides a single connection point for the upper layer application, hiding the details of the transport network. The PDF entity 110 can locate the A-TRCF entity 114 and the C-TRCF entity 116, namely, determine the A-TRCF and the C-TRCF that serve each of the streams and then interact with the A-TRCF and the C-TRCF and negotiate the QoS resources for the streams. The PDF entity 110 controls the border gateway to implement NAT control, gate control and firewall traversal. The A-TRCF entity 114 is responsible for resource management and QoS control of the access network, and the C-TRCF entity 116 is responsible for resource management and QoS control of the core network.

. The ITU resource and admission function standard defines two types of resource request processes: resource request process originated by a service control function (SCF) entity 104; and resource request process originated by a customer premises equipment (CPE).

. Figure 2 shows the process of an SCF entity sending a resource request. As shown in Figure 2, the process includes:

. S202: The SCF entity 104 is triggered;

. S204: The SCF entity 104 sends a resource request to the PDF entity 110;

. S206: The PDF entity 110 decides a policy;

. S208: The PDF entity 110 checks resource availability on the TRCF entity 202, and requests resources from the TRCF 202;

. S210: The PDF entity 110 makes a final admission decision;

. S212 (if necessary): The PDF entity 110 performs policy installation on the border gateway function (BGF) entity 204;

. S214: The BGF entity 204 sends an installation response to the PDF entity 110;

. S216: Finally, the PDF entity 110 sends a resource request response to the SCF entity 104.

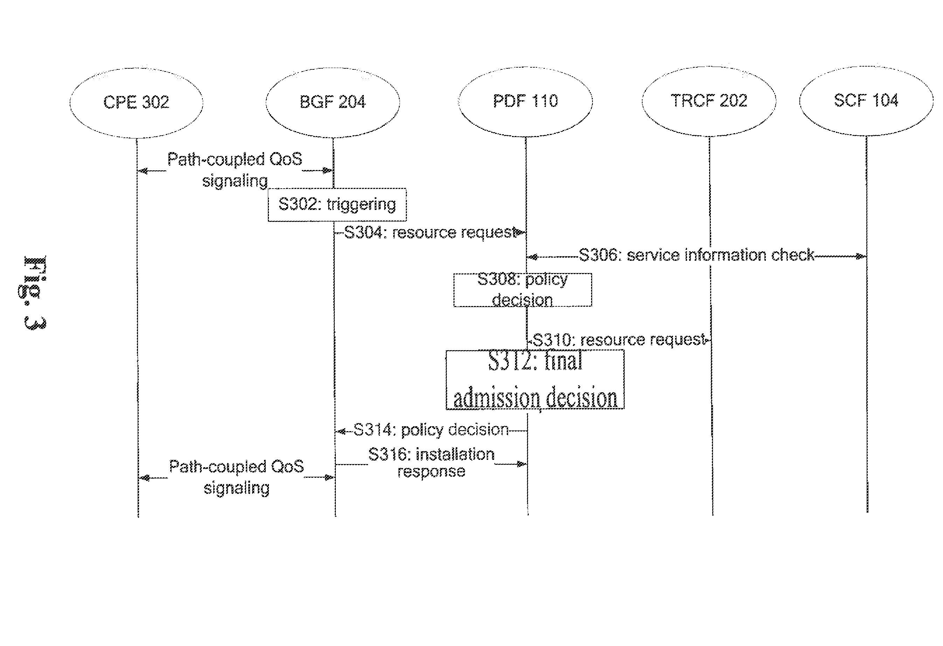

. Figure 3 shows the process of customer premises equipment (CPE) sending a resource request.

. S302: The CPE 302 triggers the BGF entity 204 through path-coupled QoS signaling;

. S304: The BGF entity 204 sends a resource request to the PDF entity 110;

. S306: The PDF entity 110 checks service information form the SCF entity 104.

. S308: The PDF entity 110 decides a policy;

. S310: Moreover, the PDF entity 110 checks resource availability on the TRCF 202, and requests resources on the TRCF 202;

. S312: The PDF entity 110 makes a final admission decision.

. S314: The PDF entity 110 transmit a message which is to instruct the BGF entity 204 to perform policy installation to the BGF entity 204;

. S316: The BGF entity 204 sends an installation response to the PDF entity 110.

. In the foregoing process, for any resource request in step S204 and step S304, multiple media streams which may be required with different Quality of Service (QoS) may request resources concurrently. For example, some media streams require resources of the C-TRCF entity while other media streams do not require such resources. Suppose that a resource request carries three media streams (a, b, c), where media streams a and b require resources of the A-TRCF entity; media streams b and c require resources of the C-TRCF entity; and media streams b and c require the resources on the BGF entity.

. In current practice, in step S206 and step S308, the PDF entity will: either request resources from the A-TRCF entity for all the media streams (a, b, c) or give up requesting resources from the A-TRCF entity for all the media streams (a, b, c); either request resources from the C-TRCF entity for all the media streams (a, b, c) or give up requesting resources from the C-TRCF entity for all the media streams (a, b, c); either request resources from the BGF entity for all the media streams (a, b, c) or give up requesting resources from the BGF entity for all the media streams (a, b, c).

. Therefore, the practice in the prior art is not specific to each different media stream in a resource request and not flexible enough in the media stream operations, thus causing a waste of network resources and increasing the system overhead of the user.

### Summary

. An embodiment of the present invention provides a device and method for processing resource requests and a policy decision function (PDF) entity to solve the inability of processing different media streams in a resource request flexibly in the prior art.

. To address the above technical issue, an embodiment of the present invention provides a device for processing resource requests. The device includes: a resource request receiving unit, adapted to receive a first resource request message, where the first resource request message carries at least one media stream collection; and a resource request processing entity, adapted to generate a second resource request message corresponding to each external entity among one or more external entities according to the first resource request message, where the second resource request message carries media streams selected from at least one media stream collection, and the selected media streams require the resources on the corresponding external entity.

. Further, an embodiment of the present invention provides a policy decision function (PDF) entity, which includes: a media stream resource decision unit, adapted to according to at least one media stream collection carried in the received first resource request message, decide whether a media stream in the media stream collection requires the resources on the corresponding external entity among one or more external entities, and output the decision result;

. a message assembling unit, connected to the media stream resource decision unit, and adapted to: generate a second resource request message corresponding to each external entity among one or more external entities according to the decision result, where the second resource request message carries media streams selected from at least one media stream collection, and the selected media streams require the resources on the corresponding external entity.

. Further, an embodiment of the present invention provides a method for processing resource requests. The method includes: receiving a first resource request message, where the first resource request message carries at least one media stream collection; and generating a second resource request message corresponding to each external entity among one or more external entities according to the first resource request message, where the second resource request message carries media streams selected from at least one media stream collection, and the selected media streams require the resources on the corresponding external entity.

. According to the device and method provided in an embodiment of the present invention, the media stream collections in a resource request are categorized into different media stream types, and different media streams in different sessions are handled flexibly, thus reducing the waste of network resources and the system overhead of the user.

### BRIEF DESCRIPTION OF THE DRAWINGS

. The features and merits of the present invention are more apparent with reference to the accompanying drawings, where:

. Figure 1 is a block diagram of the RACE entity in the NGN architecture in the prior art;

. Figure 2 shows the process of an SCF entity sending a resource request in the prior art;

. Figure 3 shows the process of a CPE sending a resource request in the prior art;

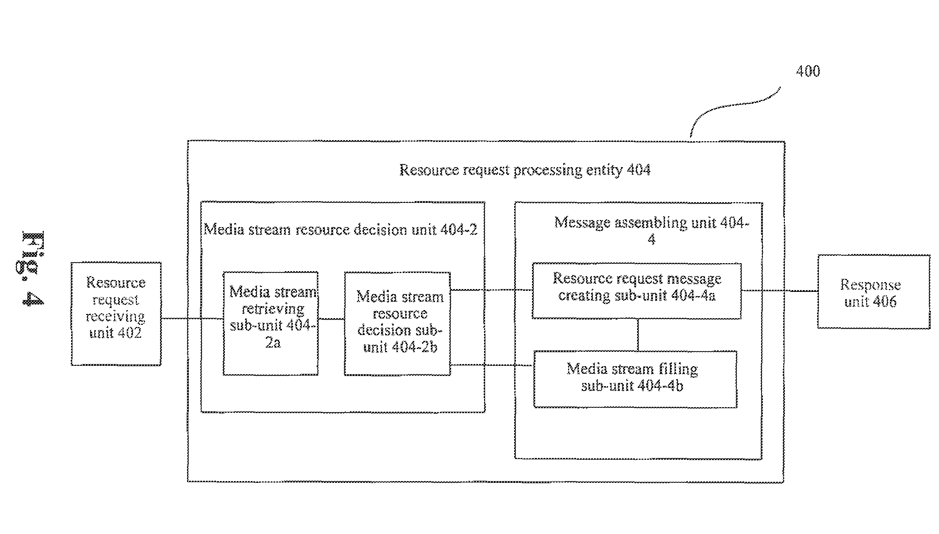

. Figure 4 shows the structure of a device for processing resource requests according to a first embodiment of the present invention;

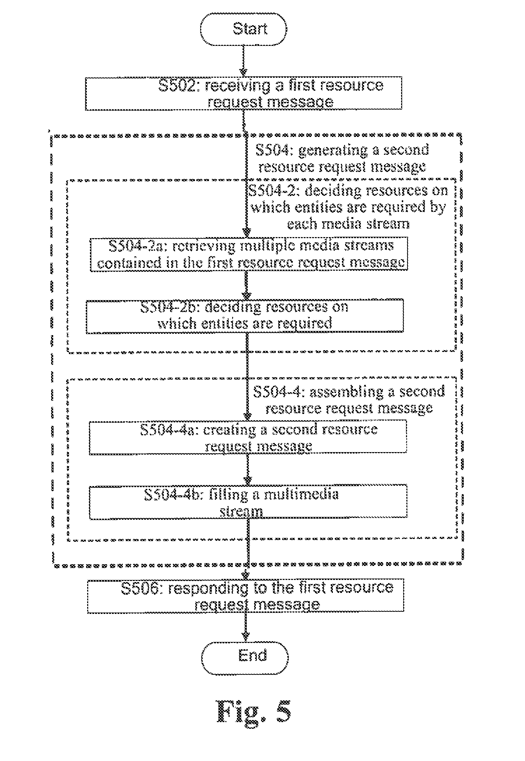

. Figure 5 is a flowchart of the method for processing resource requests according to a second embodiment of the present invention;

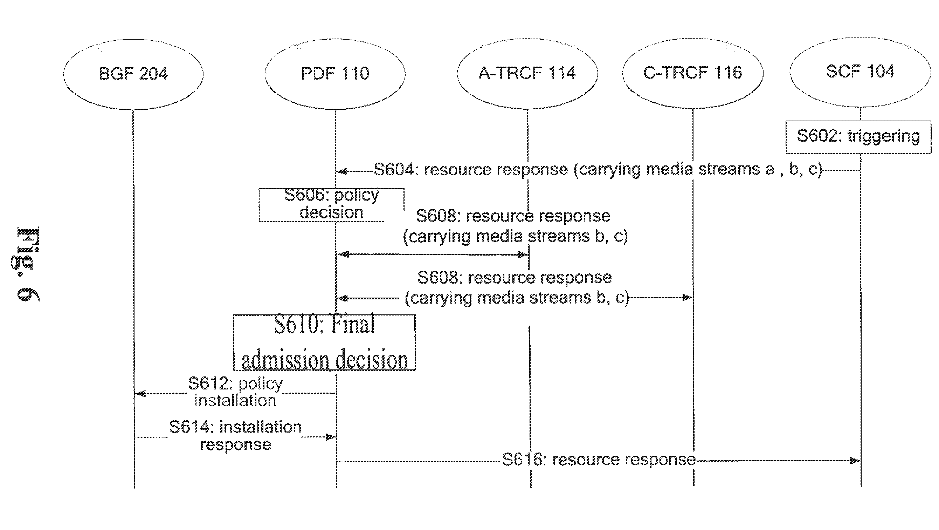

. Figure 6 shows the signaling of the method for processing resource requests shown in Figure 5; and

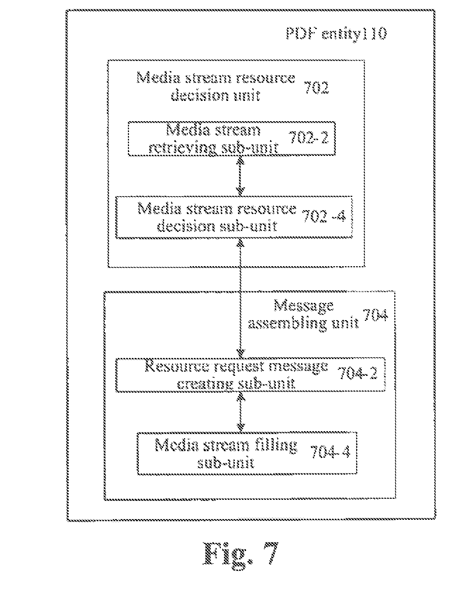

. Figure 7 shows the structure of a PDF entity according to a third embodiment of the present invention.

### DETAILED DESCRIPTION

. The present invention is hereinafter described in detail by reference to embodiments and accompanying drawings. It is understandable that, although the invention is described through some exemplary embodiments, the invention is not limited to such embodiments.

. Figure 4 shows the structure of a device for processing resource requests according to the first embodiment of the present invention. The device 400 shown in Figure 4 includes: a resource request receiving unit 402 and a resource request processing entity 404. The resource request receiving unit 402 is adapted to receive a first resource request message from the SCF entity, where the first resource request message carries (or includes, hereinafter the same) at least one media stream collection; the resource request processing entity 404 which connects to the resource request receiving unit 402 is adapted to: according to the first resource request message obtained by the resource request receiving unit 402, generate a second resource request message corresponding to each external entity among one or more external entities, where the second resource request message carries media streams selected from the one or more media stream collection, and the selected media streams require the resources on the corresponding external entity.

. The external entity includes at least one of the following: TRCF entity and BGF entity. The TRCF entity includes at least one of the following: A-TRCF entity and C-TRCF entity.

. The resource request processing entity 404 includes a media stream resource decision unit 404-2, and a message assembling unit 404-4. The media stream resource decision unit 404-2 is adapted to decide whether a media stream in at least one media stream connection requires resources of one or more external entities according to at least one media stream collection carried in the first resource request message; the message assembling unit 404-4 is adapted to generate a second resource request message according to the decision result of the media stream resource decision unit 404-2, where the second resource request message carries media streams selected from at least one media stream collection, and the selected media streams require the resources on the corresponding external entity.

. The media stream resource decision unit 404-2 includes a media stream retrieving sub-unit 404-2a and a media stream resource decision sub-unit 404-2b. The media stream retrieving sub-unit 404-2a is adapted to retrieve each media stream from the first resource request message; the media stream resource decision sub-unit 404-2b is connected to the media stream retrieving sub-unit 404-2a, and adapted to decide whether a media stream requires resources on one or more external entities and output the decision result.

. The message assembling unit 404-4 includes a resource request message generating sub-unit 404-4a and a media stream filling sub-unit 404-4b. The resource request message generating sub-unit 404-4a is adapted to generate a second resource request message which needs to be sent to the corresponding external entity according to the decision result and the type of one or more external entities; the media stream filling sub-unit 404-4b is adapted to fill a media stream that requires resources of one or more external entities into the second resource request message that needs to be sent to the corresponding external entity according to the decision result of the media stream resource decision sub-unit 404-2b.

. The device for processing resource requests further includes a response unit 406, which is connected to the message assembling unit 404-4 and adapted to: send the second resource request message to the corresponding one or more external entities; make a final admission decision according to the response from the external entity; and send a resource request response to the SCF entity.

. Figure 5 is a flowchart of the method for processing resource requests according to the second embodiment of the present invention. As shown in Figure 5, the method includes:

. S502: receiving a first resource request message from the SCF entity, where the first resource request message carries at least one media stream collection;

. S504: generating a second resource request message corresponding to each external entity among one or more external entities according to the first resource request message, where the second resource request message carries media streams selected from at least one media stream collection, and the selected media streams require the resources on the external entity.

. The external entity includes at least one of the following: TRCF entity and BGF entity. The TRCF entity includes at least one of the following: A-TRCF entity and C-TRCF entity.

. Step S504 further includes:

. S504-2: according to at least one media stream carried in the first resource request message, deciding whether a media stream in at least one media stream collection carried in the first resource request message requires the resources on one or more external entities, and outputting the decision result; and

. S504-4: generating a second resource request message corresponding to each external entity among one or more external entities according to the decision result, where the second resource request message carries media streams selected from at least one media stream collection, and the selected media streams require the resources on the external entity.

. Step S504-2 further includes:

. S504-2a: retrieving each media stream contained in the media stream collection from the first resource request message; and

. S504-2b: deciding whether a media stream requires resources on one or more external entities and outputting the decision result.

. Step S504-4 further includes:

. S504-4a: generating a second resource request message that needs to be sent to the corresponding external entity according to the decision result and the type of one or more external entities; and

. S504-4b: filling a media stream that requires resources of one or more external entities into the second resource request message that needs to be sent to the corresponding external entity according to the decision result.

. The method further includes step S506: sending the second resource request message to the corresponding one or more external entities; making a final admission decision according to the response from the external entity; and sending a resource request response to the SCF entity.

. Figure 6 shows the signaling of the method for processing resource requests shown in Figure 5. Figure 6 illustrates the details of the method for processing resource requests in a RACS, primarily the process of shunting different media streams on the PDF entity. The PDF entity decides whether each media stream requires the resources on a specific network resource management entity (such as A-TRCF, C-TRCF, and BGF) according to the specific requirements of different media streams, and hence carries only the necessary media streams when sending a resource request to or performing policy installation on the network resource management entity (such as A-TRCF, C-TRCF, and BGF).

. S602 (as shown in Figure 6): The SCF entity 104 is triggered;

. S604: The SCF entity 104 sends a resource request to the PDF entity 110;

. S606: The PDF entity 110 decides a policy;

. S608: The PDF entity 110 checks resource availability on the A-TRCF 114 and the C-TRCF 116, and requests resources on the A-TRCF 114 and the C-TRCF 116;

. S610: The PDF entity 110 makes a final admission decision;

. S612 (if necessary): The PDF entity 110 performs policy installation on the BGF entity 204;

. S614: The BGF entity 204 sends a response to the PDF entity 110.

. S616: Finally, the PDF entity 110 sends a resource request response to the SCF entity 104.

. For better understanding of the present invention, some examples are given below.

. In this embodiment, suppose that the resource request of the SCF entity received by the PDF entity 110 carries media streams a, b and c. According to the media stream information and the policy information in the PDF entity 110, the PDF entity 110 decides that: media streams a and b require resources of the A-TRCF entity 114, so the PDF entity 110 carries only media streams a and b when sending a resource request to the A-TRCF 114; media streams b and c require resources of the C-TRCF 116, so the PDF entity 110 carries only media streams b and c when sending a resource request to the C-TRCF 116; media streams b and c require resources on the BGF entity 204, so the PDF entity 110 carries only media streams b and c when performing policy installation on the BGF entity 204.

. Figure 7 shows the structure of a PDF entity 110 according to the third embodiment of the present invention. A media stream decision unit 702 may decide whether a media stream requires resources on a specific network resource management entity (such as A-TRCF, C-TRCF and BGF) according to the information (such as media stream type, media stream priority, media stream service type, and media stream service level) carried in a resource request message from the SCF entity, or according to the local policy on the PDF entity 110, or according to the combination of the local policy on the PDF entity 110 and the information carried in a resource request from the SCF entity.

. In the PDF entity 110, different media streams in the same resource request are shunted. The PDF entity 110 decides whether each media stream requires the resources on a specific network resource management entity (such as A-TRCF, C-TRCF, and BGF) according to the different requirements of different media streams, and hence carries only the necessary media streams when sending a resource request to or performing policy installation on the network resource management entity (such as A-TRCF, C-TRCF, and BGF).

. As shown in Figure 7, the PDF entity 110 may include two function units: a media stream resource decision unit 702, and a message assembling unit 704. The media stream resource decision unit 702 is adapted to decide whether a media stream requires resources on network resource management entities (such as A-TRCF, C-TRCF and BGF). The media stream resource decision unit 702 includes a media stream retrieving sub-unit 702-2 and a media stream resource decision sub-unit 702-4. The message assembling unit 704 is adapted to generate a second resource request message according to the decision result of the media stream decision unit 702, where the second resource request message carries media streams selected from at least one media stream collection, and the selected media streams require the resources on the corresponding external entity. In other words, the message assembling unit 704 assembles a second resource request message and a policy installation message according to the output result of the media stream resource decision unit 702. The media stream carried in the second resource request message or the policy installation message on different interfaces may vary. The message assembling unit 704 includes a resource request message generating sub-unit 704-2 and a media stream filling sub-unit 704-4.

. The work process of the media stream resource decision unit 702 is: Firstly, the media stream resource decision unit 702 receives a resource request message from the SCF entity. Secondly, the media stream retrieving sub-unit 702-2 in the media stream resource decision unit retrieves each media stream in the resource request message. The media stream resource decision sub-unit 702-4 in the media stream resource decision unit 702 makes a decision for each media stream, determining whether each media stream requires the resources on network resource management entities (such as A-TRCF, C-TRCF and BGF). The decision may be based on the information (such as media stream type, media stream priority, media stream service type, and media stream service level) carried in the resource request message from the SCF entity, and the local policy information on the PDF entity. Finally, the media stream resource decision sub-unit outputs the decision results of the media streams.

. The media stream resource decision sub-unit may output the decision results of media streams in these two modes or other possible modes:

. Mode 1: The media stream resource decision sub-unit outputs the decision results for each media stream, and specifies the resources of the network resource management entities (such as A-TRCF, C-TRCF and BGF) required by each media stream. To facilitate subsequent processing, the media stream resource decision sub-unit may also output information about all involved network resource management entities. This information may be used for deciding which network resource management entities are required to send a resource request message or a policy installation message, for example, {{media stream 1: A-TRCF, C-TRCF}, {media stream 2: C-TRCF, BGF}, {media stream 3: BOF}}.

. Mode 2: The media stream resource decision sub-unit outputs the decision results for each type of network resource management entity. The same media stream may be involved in different types, for example: {{A-TRCF: media stream 1, media stream 2}, {C-TRCF: media stream 2, media stream 3}, {BGF: media stream 1, media stream 2, media stream 3}}.

. The work process of the message assembling unit 704 is: outputting the type of a network resource management entity, and then generating a resource request message that will be sent to the entity according to the input type of the network management entity. The generation process involves a resource request message generating sub-unit 704-2, adapted to generate a second resource request message that needs to be sent to the corresponding external entity according to the decision result and the type of one or more external entities, namely, generate a second resource request message to be sent to the entity and fill the corresponding media stream into the generated second resource request message through a media stream filling unit 704-4.

. The media stream is filled in different modes, depending on the mode of outputting the decision result of the media stream.

. In the first output mode, the message assembling unit 704 needs to traverse the decision results of all media streams of the service session. If the decision result of a media stream indicates that the media stream requires the resources on a network resource management entity, the message assembling unit 704 fills the information about the media stream into the corresponding resource request message.

. In the second output mode, the message assembling unit 704 can identify all media streams that require resources of a specific network resource management entity in the service session only by matching the input type of network management entity with the type of the decision results of all media streams in the service session. Then the message assembling unit 704 fills the information about such media streams into the corresponding resource request message.

. It is evident that the media streams in a resource request are categorized in an embodiment of the present invention so that the RACF entity can handle different media streams in the same session flexibly, thus reducing the waste of network resources and the system overhead of the user.

. The embodiments described above are only preferred ones of the invention, and are not meant to confine the scope of protection of the invention. It is apparent that those skilled in the art can make various modifications and variations to the invention without departing from the spirit and scope of the invention. The invention is intended to cover the modifications and variations provided that they fall in the scope of protection defined by the following claims or their equivalents.

## Claims

1. A device for processing resource requests, **characterized by** comprising:
a resource request receiving unit, adapted to receive a first resource request message, wherein the first resource request message carries at least one media stream collection; and
a resource request processing entity, adapted to generate second resource request messages according to the first resource request message, wherein each of the second resource request messages is respectively corresponding to one external entity among one or more external entities, wherein the second resource request message carries media streams selected from the at least one media stream collection, and the selected media streams require the resources on the corresponding external entity.

2. The device according to claim 1, wherein the external entity comprises a transport resource control function (TRCF) entity and/or a border gateway function (BGF) entity.

3. The device according to claim 2, wherein the TRCF entity comprises an access network TRCF (A-TRCF) entity and/or a core network TRCF (C-TRCF) entity.

4. The device according to claim 1, wherein the resource request processing entity comprises:
a media stream resource decision unit, adapted to decide whether a media stream requires the resources on the corresponding external entity among one or more external entities according to at least one media stream carried in the first resource request message, and output the decision result; and
a message assembling unit, connected to the media stream resource decision unit, and adapted to generate second resource request messages according to the first resource request message, wherein each of the second resource request messages is respectively corresponding to one external entity among one or more external entities, wherein the second resource request message carries media streams selected from at least one media stream collection, and the selected media streams require the resources on the corresponding external entity.

5. The device according to claim 4, wherein the media stream resource decision unit comprises:
a media stream retrieving sub-unit, adapted to retrieve each media stream in one or more media stream collections from the first resource request message; and
a media stream resource decision sub-unit, connected to the media stream retrieving sub-unit and adapted to decide whether a media stream requires the resources on the corresponding external entity among one or more external entities, and output the decision result.

6. The device according to claim 4 or 5, wherein the message assembling unit comprises:
a resource request message generating sub-unit, adapted to generate a second resource request message that needs to be sent to the corresponding external entity according to the decision result and the type of one or more external entities; and
a media stream filling sub-unit, adapted to fill a media stream that requires resources of the corresponding external entity among one or more external entities into the second resource request message that needs to be sent to the corresponding external entity according to the decision result of the media stream resource decision unit.

7. The device according to claim 1, further comprising a response unit, adapted to send the second resource request message to the corresponding external entity; make a final admission decision according to the response from the external entity; and return a resource request response.

8. A policy decision function (PDF) entity, comprising:
a media stream resource decision unit, adapted to decide whether a media stream in the media stream collection requires the resources on the corresponding external entity among one or more external entities according to at least one media stream collection carried in the received first resource request message, and output the decision result; and
a message assembling unit, connected to the media stream resource decision unit, and adapted to generate a second resource request message corresponding to each external entity among one or more external entities according to the decision result, wherein the second resource request message carries media streams selected from at least one media stream collection, and the selected media streams require the resources on the corresponding external entity.

9. The PDF entity according to claim 8, wherein the media stream resource decision unit comprises:
a media stream retrieving sub-unit, adapted to retrieve each media stream contained in one or more media stream collections from the first resource request message; and
a media stream resource decision sub-unit, connected to the media stream retrieving sub-unit and adapted to decide whether a media stream requires the resources on the corresponding external entity among one or more external entities, and output the decision result.

10. The PDF entity according to claim 8, wherein the message assembling unit comprises:
a resource request message generating sub-unit, adapted to generate a second resource request message that needs to be sent to the corresponding external entity according to the decision result and the type of one or more external entities; and
a media stream filling sub-unit, adapted to fill a media stream that requires resources of the corresponding external entity among one or more external entities into the second resource request message that needs to be sent to the corresponding external entity according to the decision result of the media stream resource decision unit.

11. A method for processing resource requests, comprising:
receiving a first resource request message, wherein the first resource request message carries at least one media stream collection; and
generating a second resource request message corresponding to each external entity among one or more external entities according to the first resource request message, wherein the second resource request message carries media streams selected from at least one media stream collection, and the selected media streams require the resources on the corresponding external entity.

12. The method according to claim 11, wherein the process of generating a second resource request message corresponding to each external entity among one or more external entities according to the first resource request message comprises:
Deciding whether a media stream in the media stream collection requires resources on one or more external entities according to the media stream collection in the first resource request message, and outputting the decision result; and
generating a second resource request message corresponding to each external entity among one or more external entities according to the decision result, wherein the second resource request message carries media streams selected from the media stream collection, and the selected media streams require the resources on the corresponding external entity.

13. The method according to claim 12, wherein the process of deciding whether a media stream in the media stream collection requires resources on one or more external entities according to the media stream collection in the first resource request message comprises:
retrieving each media stream contained in the first resource request message; and
deciding whether a media stream requires resources on one or more external entities.

14. The method according to claim 12, wherein the process of generating a second resource request message corresponding to each external entity among one or more external entities according to the decision result comprises:
generating a second resource request message that needs to be sent to the corresponding external entity according to the type of one or more external entities; and
filling a media stream that requires resources of the corresponding external entity among one or more external entities into the second resource request message that needs to be sent to the corresponding external entity according to the decision result.

15. The method according to claim 11 or 12, further comprising:
sending the second resource request message to the corresponding one or more external entities; making a final admission decision according to the response from the external entity; and returning a resource request response.
